**Europäisches Patentamt**

**European Patent Office**

**Office européen des brevets**

(19)

(11) Veröffentlichungsnummer : **0 448 813 B1**

## (12) EUROPÄISCHE PATENTSCHRIFT

(45) Veröffentlichungstag der Patentschrift :
**03.11.93 Patentblatt 93/44**

(51) Int. Cl.⁵ : **C08G 18/08,** C08G 18/40, C08G 18/76, // (C08G18/08, 101:00)

(21) Anmeldenummer : **90124683.5**

(22) Anmeldetag : **19.12.90**

(54) **Stabile Dispersionen von Polyharnstoffen und/oder Polyhydrazodicarbonamiden in höhermolekularen, mindestens eine Hydroxylgruppe aufweisenden Verbindungen, ein Verfahren zu ihrer Herstellung und ihre Verwendung zur Herstellung von Polyurethankunststoffen.**

(30) Priorität : **07.03.90 DE 4007063**

(43) Veröffentlichungstag der Anmeldung :
**02.10.91 Patentblatt 91/40**

(45) Bekanntmachung des Hinweises auf die Patenterteilung :
**03.11.93 Patentblatt 93/44**

(84) Benannte Vertragsstaaten :
**BE DE ES FR GB IT NL SE**

(56) Entgegenhaltungen :
**GB-A- 1 453 258**
**GB-A- 2 102 825**

(73) Patentinhaber : **BAYER AG**
**D-51368 Leverkusen (DE)**

(72) Erfinder : **Gansen, Peter, Dr.**
**Roggendorfstrasse 57**
**W-5000 Köln 80 (DE)**
Erfinder : **Dietrich, Manfred, Dr.**
**Dresdenerstrasse 16**
**W-5090 Leverkusen 1 (DE)**

EP 0 448 813 B1

Jouve, 18, rue Saint-Denis, 75001 PARIS

## Beschreibung

Als Ausgangsprodukte für die Herstellung von Polyurethan-Kunststoffen, insbesondere von Polyurethan-Weichschaumstoffen, haben stabile Dispersionen von Polyharnstoffen und/oder Polyhydrazodicarbonamiden in Polyethern (sog. "PHD-Polyole") weltweit Bedeutung erlangt. Insbesondere in den USA werden in der Automobil- und Automobilzulieferer-Industrie Vollschaumsitze aus PHD-Polyolen hergestellt. Dabei wird durch die Verwendung von PHD-Polyolen eine erhöhte Verschäumungssicherheit und eine günstigere Härte/Rohdichte-Relation der Kaltformschaumstoffqualitäten erreicht.

Gemäß DE-PS 2 513 815, DE-PS 2 550 833 und DE-PS 2 550 862 werden niedrigviskose, stabile Dispersionen von Polyharnstoffen und/oder Polyhydrazodicarbamiden in situ hergestellt, indem die Umsetzung organischer Polyisocyanate mit primären und/oder sekundären Aminogruppen aufweisenden Polyaminen und/oder Hydrazinen und/oder Hydraziden in höhermolekularen Polyolen kontinuierlich in einem Durchflußmischer erfolgt und das den Durchflußmischer verlassende Produkt in einer Vorlage nachreagiert, wobei gleichzeitig oder anschließend gegebenenfalls vorhandenes Wasser im Vakuum entfernt wird. Polyharnstoffdispersionen können auch nach weiteren Verfahren diskontinuierlich hergestellt werden, die in DE-OS 2 550 796 bzw. DE-OS 2 550 797 beschrieben sind. Hierbei werden durch anteilige Mitverwendung von Wasser als Reaktionsmedium ebenfalls niedrige Viskositäten erzielt.

Bei den gemäß den genannten Patentschriften bevorzugt eingesetzten Isocyanaten handelt es sich um Toluylendiisocyanat-Isomerengemische, insbesondere aus 80 Gew.-% 2,4- und 20 Gew.-% 2,6-Toluylendiisocyanat. Werden Gemische aus Diphenylmethan-diisocyanaten und Polyphenyl-polymethylenpolyisocyanate ("rohes MDI") eingesetzt, erhält man Produkte, welche aufgrund ihrer Viskosität nicht verarbeitbar sind.

In der DE-OS 3 500 339 werden hochfüllstoffhaltige PHD-Polyole beschrieben, bei denen Additionsprodukte aus Ethylendiamin und Acrylnitril mit einem Polyisocyanat z.B. auch rohem MDI zur Umsetzung gebracht werden. Der besondere Vorteil dieses Verfahrens ist die niedrige Viskosität der entstehenden Produkte und die hervorragende Verarbeitbarkeit dieser Polyole zu Polyurethan-Kunststoffen. Diese PHD-Typen sind jedoch toxikologisch nicht unbedenklich. Bei sehr hohen Temperaturen kann in geringem Umfang eine Rückspaltung stattfinden, so daß Acrylnitril frei werden kann.

Eine weitere Möglichkeit die Viskosität von PHD-Polyolen bei gleichem Füllstoffgehalt zu erniedrigen, besteht darin, im Mischprozeß Hydroxyl-Gruppen enthaltende Materialien insbesondere Wasser zuzugeben, so wie es in der EP-OS 187 333 beschrieben wird. Der Nachteil dieses Verfahrens ist der zusätzliche Verfahrensschritt, der die Herstellkosten deutlich erhöht.

Überraschenderweise wurde nun gefunden, daß sich auch unter Verwendung von MDI niedrigviskose PHD-Polyole herstellen lassen, wenn statt des üblichen "rohen MDI's" mit geringem 2,4'-Isomerengehalt und hohem Oligomeranteil spezielle MDI-Typen zum Einsatz kommen. Diese MDI-Typen sind durch den relativ hohen Gehalt an monomeren Isomeren gekennzeichnet, insbesondere an 2,4'-MDI. Es lassen sich auf diese Weise bis zu 30 %ige verarbeitbare Dispersionen herstellen.

Die Polyurethan-Weichschaumstoffe, die mit den erfindungsgemäßen Dispersionen hergestellt werden, zeichnen sich zudem durch ein verbessertes Flammverhalten aus, verglichen mit Schaumstoffen, welche mit TDI-basierten PHD-Poylolen hergestellt werden, wie es in der DE-OS 2 519 004 dargestellt wird. Die in dieser DE-OS beschriebenen Vorteile wie größere Härte, Elastizität und günstiges mechanisches Werteniveau der sich ergebenden Schaumstoffe bleiben auch beim Einsatz der erfindungsgemäßen Dispersionen erhalten.

Ein weiterer Vorteil der nach dem erfindungsgemäßen Verfahren hergestellten Polyurethan-Schaumstoffe ist deren bessere Beständigkeit gegen feuchte Hitze. Es zeigt sich, daß nach Lagerung im Dampfautoklaven ein deutlich verbesserter Druckverformungsrest (DVR) und eine geringere Stauchhärteänderung resultiert, wenn die erfindungsgemäßen Dispersionen eingesetzt werden.

Gegenstand der Erfindung sind stabile Dispersionen von Polyharnstoffen und/oder Polyhydrazodicarbonamiden in mindestens eine Hydroxylgruppe aufweisenden höhermolekularen Verbindungen vom mittleren Molekulargewicht 200 bis 16.000, erhältlich durch Umsetzung

a) eines Gemischs aus Diphenylmethan-diisocyanaten und Polyphenylpolymethylen-polyisocyanaten, bestehend aus

50-75 Gew.-% 4,4'-Diphenylmethan-diisocyanat (4,4'-MDI)
10-25 Gew.-% 2,4'-Diphenylmethan-diisocyanat (2,4'-MDI)
0- 4 Gew.-% 2,2'-Diphenylmethan-diisocyanat (2,2'-MDI) und
0-30 Gew.-% Polyphenyl-polymethylen-polyisocyanaten (oligomere Isomere) mit

b) primäre und/oder sekundäre Aminogruppen aufweisenden Polyaminen und/oder Hydrazinen und/oder Hydraziden in den

c) mindestens eine Hydroxylgruppe aufweisenden höhermolekularen Verbindungen vom mittleren Molekulargewicht 200 bis 16.000.

Erfindungsgemäß werden vorzugsweise als höhermolekulare Verbindungen (Komponente c) Polyether eingesetzt.

Nach einer bevorzugten Ausführungsform enthält die Komponente b) bis zu 40 Mol-% an Alkanolaminen.

Gegenstand der Erfindung ist ferner ein Verfahren zur Herstellung von stabilen Dispersionen von Polyharnstoffen und/oder Polyhydrazodicarbonamiden in mindestens eine Hydroxylgruppe aufweisenden höhermolekularen Verbindungen vom mittleren Molekulargewicht 200 bis 16.000, dadurch gekennzeichnet, daß man

a) ein Gemisch aus Diphenylmethan-diisocyanaten und Polyphenyl-polymethylen-polyisocyanaten, bestehend aus

50-75 Gew.-% 4,4'-Diphenylmethan-diisocyanat
10-25 Gew.-% 2,4'-Diphenylmethan-diisocyanat
0- 4 Gew.-% 2,2'-Diphenylmethan-diisocyanat und
0-30 Gew.-% Polyphenyl-polymethylen-polyisocyanaten

mit

b) primäre und/oder sekundäre Aminogruppen aufweisenden Polyaminen und/oder Hydrazinen und/oder Hydraziden in

c) mindestens eine Hydroxylgruppe aufweisenden höhermolekularen Verbindungen vom mittleren Molekulargewicht 200 bis 16.000

umsetzt.

Die Erfindung betrifft auch ein Verfahren zur Herstellung von gegebenenfalls geschäumten Polyurethankunststoffen, insbesondere von Weichschaumstoffen, durch Umsetzung von Polyisocyanaten mit höhermolekularen Hydroxylverbindungen, gegebenenfalls in Gegenwart von Wasser und/oder leichtflüchtigen organischen Substanzen als Treibmittel sowie gegebenenfalls unter Mitverwendung von Katalysatoren, Schaumhilfs- und Zusatzmitteln und Kettenverlängerungs- und/oder Vernetzungsmitteln, dadurch gekennzeichnet, daß als höhermolekulare Hydroxylverbindungen ausschließlich oder teilweise die erfindungsgemäßen Dispersionen eingesetzt werden.

Als Ausgangsverbindungen für die Herstellung der erfindungsgemäßen Dispersionen werden eingesetzt:
a) Ein Gemisch aus Diphenylmethan-diisocyanaten und Polyphenylpolymethylen-polyisocyanaten, bestehend aus

50-75 Gew.-% 4,4 -Diphenylmethan-diisocyanat
10-25 Gew.-% 2,4'-Diphenylmethan-diisocyanat
0- 4 Gew.-% 2,2'-Diphenylmethan-diisocyanat und
0-30 Gew.-% Polyphenyl-polymethylen-polyisocyanaten.

Vorzugsweise besteht dieses Gemisch aus

50-75 Gew.-% 4,4'-Diphenylmethan-diisocyanat
10-25 Gew.-% 2,4'-Diphenylmethan-diisocyanat
0- 3 Gew.-% 2,2'-Diphenylmethan-diisocyanat und
10-30 Gew.-% Polyphenyl-polymethylen-polyisocyanaten.

Als Komponente b) seien beispielsweise genannt: primäre und/oder sekundäre, aliphatische, araliphatische, cycloaliphatische und aromatische Polyamine, z.B. Ethylendiamin, 1,2- und 1,3-Propylendiamin, Tetramethylendiamin, Hexamethylen-Dodekamethylendiamin, Trimethyldiaminohexan, N,N'-Dimethylethylendiamin, 2,2'-Bis-aminopropyl-methylamin, höhere Homologe des Ethylendiamins wie Diethylentriamin, Triethylentetramin und Tetraethylenpentamin, Homologe des Propylendiamins wie Dipropylentriamin, Piperazin, N,N'-Bisaminoethylpiperazin, Triazin, 4-Amino-benzylamin, 4-Aminophenylethylamin, 1-Amino-3,3,5-trimethyl-5-aminomethyl-cyclohexan, 4,4'-Diaminodicyclohexylmethan und -propan, 1,4-Diaminocyclohexan, Phenylendiamine, Naphthylendiamine, Kondensate aus Anilin und Formaldehyd, Toluylendiamine, die Bis-aminomethylbenzole und die an einem oder beiden Stickstoffatomen monoalkylierten Derivate der genannten aromatischen Amine. Die Polyamine haben in der Regel ein Molekulargewicht von 60 bis 1.000, bevorzugt von 60 bis 300.

Als Hydrazine seien Hydrazin und mono- oder N,N'-disubstituierte Hydrazine genannt, wobei die Substituenten $C_1$-$C_6$-Alkylgruppen, Cyclohexylgruppen oder Phenylgruppen sein können. Die Hydrazine haben in der Regel ein Molekulargewicht von 32 bis 500. Hydrazin selbst wird bevorzugt eingesetzt.

Als Hydrazide seien genannt die Hydrazide zwei- oder mehrwertiger Carbonsäuren wie Kohlensäure, Oxalsäure, Malonsäure, Bernsteinsäure, Adipinsäure, Sebazinsäure, Azelainsäure, Maleinsäure, Fumarsäure, Phthalsäure, Isophthalsäure, Terephthalsäure, ferner die Ester der Hydrazinmonocarbonsäure mit zwei- oder mehrwertigen Alkoholen und Phenolen wie z.B. Ethandiol, Propandiol-1,2, Butandiol-1,2, -1,3 und -1,4, Hexandiol, Diethylenglykol, Triethylenglykol, Tetraethylenglykol, Dipropylenglykol, Tripropylenglykol und Hydrochinon, sowie die Amide der Hydrazinmonocarbonsäure (Semicarbazide) mit z.B. den vorstehend genannten Di- und Polyaminen. Die Hydrazide haben in der Regel ein Molekulargewicht von 90 bis 3.000, bevorzugt von 90 bis 1.000.

Die vorstehend genannten Amine und Hydrazine werden gegebenenfalls in Form ihrer handelsüblichen wäßrigen Lösungen eingesetzt.

Als gegebenenfalls mitzuverwendende Alkanolamine seien z.B. Ethanolamin, Diethanolamin, Propanolamin, Dipropanolamin, Butanolamin und Dibutanolamin genannt

Ausgangskomponente c) sind mindestens eine, in der Regel zwei bis acht, vorzugsweise aber zwei bis sechs Hydroxylgruppen aufweisende höhermolekulare Verbindungen wie Polyether, Polyester, Polyesteramide, Polythioether oder Polycarbonate vom mittleren Molekulargewicht 200 bis 16.000, vorzugsweise 500 bis 12.000. Polyether sind erfindungsgemäß bevorzugt.

Die Hydroxylgruppen aufweisenden, bevorzugten Polyether sind solche der an sich bekannten Art und werden z.B. durch Polymerisation von Epoxiden wie Ethylenoxid, Propylenoxid, Butylenoxid, Styroloxidoder Epichlorhydrin mit sich selbst, z.B. in Gegenwart von Lewis-Katalysatoren wie BF$_3$ oder durch Anlagerung dieser Epoxide, vorzugsweise von Ethylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z.B. Ethylenglykol, Propylenglykol-( 1,3) oder -(1.2), Trimethylolpropan, Glycerin Sorbit, 4,4'-Dihydroxy-diphenylpropan, Anilin, Ethanolamin und Ethylendiamin hergestellt Auch Sucrosepolyether, wie sie z.B. in den DE-AS 1 176 358 und 1 064 938 beschrieben werden, sowie auf Formit oder Formose gestartete Polyether (DE-OS 2 639 083 bzw. 2 737 951), kommen erfindungsgemäß in Frage. Vielfach sind solche Polyether bevorzugt, die überwiegend (bis zu 90 Gew.-%, bezogen auf alle vorhandenen OH-Gruppen im Polyether) primäre OH-Gruppen aufweisen. Auch OH-Gruppen aufweisende Polybutadiene sind erfindungsgemäß geeignet, ferner hydroxyfunktionelle Polymerisate des Tetrahydrofurans.

Erfindungsgemäß können auch anteilmäßig oder ausschließlich Amine, Hydrazine oder Hydrazide verwendet werden, deren Funktionalität über zwei liegt. Es ist als überraschend anzusehen, daß die erfindungsgemäße Umsetzung solcher höherfunktionaler Verbindungen in den Hydroxylgruppen enthaltenden Verbindungen nicht zu festen oder zumindest sehr hochviskosen Reaktionsprodukten führt, sondern auch zu feinteiligen, niedrigviskosen Dispersionen.

Die erfindungsgemäß hergestellten, in den Hydroxylgruppen enthaltenden Verbindungen dispergierten Polyadditionsprodukte können auch durch anteilige Mitverwendung von monofunktionellen Isocyanaten, Aminen, Hydrazinderivaten oder Ammoniak modifiziert sein.

So läßt sich beispielsweise das mittlere Molekulargewicht der Polyadditionsprodukte durch den Einbau solcher monofunktionellen Verbindungen in gewünschter Weise einstellen. Bei Verwendung von Alkanolaminen mit primären oder sekundären Aminogruppen können Polyharnstoffe und Polyharnstoffpolyhydrazodicarbonamide aufgebaut werden, die freie Hydroxylgruppen aufweisen. Auch das Einbringen anderer Gruppierungen, wie z.B. Estergruppen, längerer aliphatischer Reste, tertiärer Aminogruppen, aktive Doppelbindungen usw. ist möglich, wenn entsprechend substituierte Mono- oder Diamine bzw. Isocyanate mitverwendet werden.

Die monofunktionellen Verbindungen können erfindungsgemäß in Anteilen bis zu 40 Mol-%, vorzugsweise bis zu 25 Mol-%, (bezogen auf gesamtes Isocyanat bzw. Amin, Hydrazin oder Hydrazid) eingesetzt werden.

Geeignete monofunktionelle Isocyanate sind z.B. Alkylisocyanate wie Methyl-, Ethyl-, Isopropyl-, Isobutyl-, Hexyl-, Lauryl- und Stearylisocyanat, Chlorhexylisocyanat, Cyclohexylisocyanat, Phenylisocyanat, Tolylisocyanat, 4-Chlorphenylisocyanat und Diisopropylphenylisocyanat.

Als Monoamine seien z.B. Alkyl- und Dialkylamine mit C$_1$-C$_{18}$-Alkylgruppen, cycloaliphatische Amine wie Cyclohexylamin und Homologe, Anilin und N-Alkylaniline sowie am Benzolkern substituierte Anilinderivate, Alkanolamine, wie Ethanolamin, Diethanolamin, Propanolamin, Dipropanolamin, Butanolamin und Dibutanolamin, sowie Diamine mit einer tertiären und einer primären bzw. sekundären Aminogruppe, wie z.B. N,N-Dimethyl-ethylendiamin und N-Methylpiperazin genannt. Als monofunktionelle Hydrazinderivate und Hydrazide kommen z.B. N,N-Dialkylhydrazine, die Hydrazide von Monocarbonsäuren, Hydrazinmonocarbonsäureester der monofunktionellen Alkohole oder Phenole sowie Semicarbazide wie z.B. Methyl, Ethyl-, Propyl-, Butyl-, Hexyl-, Dodecyl-, Stearyl-, Phenyl- und Cyclohexyl-semicarbazid in Betracht.

Die Herstellung der erfindungsgemäßen Dispersionen erfolgt in an sich bekannter Weise diskontinuierlich oder (bevorzugt) kontinuierlich.

Die Konzentration der Polyadditionsprodukte in der Hydroxylgruppen aufweisenden Verbindung kann in weiten Bereichen schwanken, liegt aber im allgemeinen zwischen 1 und 35 Gew.-%, vorzugsweise zwischen 5 und 25 Gew.-%. Die für Schaumstoffe mit optimalen Eigenschaften erforderliche Menge an dispergiertem Polyadditionsprodukt liegt im allgemeinen bei 5 bis 15 Gew.-%. Selbstverständlich ist es erfindungsgemäß möglich, solche 5 bis 15 gew.-%igen Dispersionen direkt herzustellen. Aus ökonomischen Gründen wird oft bevorzugt, eine Dispersion mit einem möglichst hohen Gehalt an Polyadditionsprodukten herzustellen (ca 20 bis 35 Gew.-%) und diese dann mit einer beliebigen höhermolekularen, Hydroxylgruppen aufweisenden Ver-

4

bindung auf die gewünschte Konzentration zu verdünnen.

Die nach dem erfindungsgemäßen Verfahren hergestellten Dispersionen lassen sich beispielsweise zu weichen, halbharten und harten Polyurethanschaumstoffen mit verbesserten Eigenschaften wie erhöhter Zugfestigkeit und Härte verarbeiten. Zur Herstellung von z.B. Elastomeren, Überzügen und Beschichtungen auf Polyurethanbasis sind die Dispersionen ebenfalls geeignet.

Für die Herstellung der gegebenenfalls geschäumten Polyurethankunststoffe werden als Ausgangskomponenten eingesetzt:

1. Aliphatische, cycloaliphatische, araliphatische, aromatische und heterocyclische Polyisocyanate, wie sie z.B. von W. Siefken in Justus Liebigs Annalen der Chemie, 562, Seiten 75-136, beschrieben werden, beispielsweise solche der Formel

$$Q(NCO)_n$$

in der

n = 2 bis 4, vorzugsweise 2 bis 3, und

Q    einen aliphatischen Kohlenwasserstoffrest mit 2 bis 18, vorzugsweise 6 bis 10, C-Atomen, einen cycloaliphatischen Kohlenwasserstoffrest mit 4 bis 15, vorzugsweise 5 bis 10, C-Atomen, einen aromatischen Kohlenwasserstoffrest mit 6 bis 15, vorzugsweise 6 bis 13, C-Atomen oder einen araliphatischen Kohlenwasserstoffrest mit 8 bis 15, vorzugsweise 8 bis 13, C-Atomen bedeuten, z.B. solche Polyisocyanate, wie sie in der DE-OS 28 32 253, Seiten 10-11, beschrieben werden. Besonders bevorzugt werden in der Regel die technisch leicht zugänglichen Polyisocyanate, z.B. das 2,4- und 2,6-Toluylendiisocyanat, sowie beliebige Gemische dieser Isomeren ("TDI"); Polyphenylpolymethylenpolyisocyanate, wie sie durch Anilin-Formaldehyd-Kondensation und anschließende Phosgenierung hergestellt werden ("rohes MDI") und Carbodiimidgruppen Urethangruppen, Allophanatgruppen, Isocyanuratgruppen, Harnstoffgruppen oder Biuretgruppen aufweisenden Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten.

2. Ausgangskomponenten sind ferner die erfindungsgemäßen Dispersionen und gegebenenfalls anteilig (bis zu 80 Gew.-%, bezogen auf die erfindungsgemäßen Dispersionen) andere Verbindungen mit mindestens zwei gegenüber Isocyanaten reaktionsfähigen Wasserstoffatomen von einem Molekulargewicht in der Regel von 200 bis 16.000. Hierunter versteht man neben Aminogruppen, Thiolgruppen oder Carboxylgruppen aufweisenden Verbindungen vorzugsweise Hydroxylgruppen aufweisende Verbindungen, insbesondere 2 bis 8 Hydroxylgruppen aufweisende Verbindungen, speziell solche vom Molekulargewicht 1.000 bis 6.000, vorzugsweise 2.000 bis 6.000, z.B. mindestens 2, in der Regel 2 bis 8, vorzugsweise aber 2 bis 6, Hydroxylgruppen aufweisende Polyether und Polyester sowie Polycarbonate und Polyesteramide, wie sie für die Herstellung von homogenen und zellförmigen Polyurethanen an sich bekannt sind und wie sie z.B. in der DE-OS 28 32 253, Seiten 11-18, beschrieben werden.

3. Gegebenenfalls sind weitere Ausgangskomponenten Verbindungen mit mindestens zwei gegenüber Isocyanaten reaktionsfähigen Wasserstoffatomen und einem Molekulargewicht von 32 bis 199. Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf. Beispiele hierfür werden in der DE-OS 28 32 253, Seiten 19-20, beschrieben.

4. Gegebenenfalls werden Hilfs- und Zusatzmittel mitverwendet wie

a) Wasser und/oder leicht flüchtige organische Substanzen als Treibmittel,

b) zusätzliche Katalysatoren der an sich bekannten Art in Mengen von bis zu 10 Gew.-%, bezogen auf die Menen an Komponente 2,

c) oberflächenaktive Zusatzstoffe, wie Emulgatoren und Schaumstabilisatoren,

d) Reaktionsverzögerer, z.B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe und weitere Flammschutzmittel der an sich bekannten Art, z.B. Trikresylphosphat, ferner Stabilisatoren gegen Alterungs- und Witterungseinflüsse. Weichmacher und fungistatisch und bakteriostatisch wirkende Substanzen sowie Füllstoffe wie Bariumsulfat, Kieselgur, Ruß- oder Schlämmkreide.

Diese gegebenenfalls mitzuverwendenden Hilfs- und Zusatzstoffe werden beispielsweise in der DE-OS 27 32 292, Seiten 21-24, beschrieben.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103-113 beschrieben.

Die Schaumstoffe werden in an sich bekannter Weise hergestellt.

Durchführung des Verfahrens zur Herstellung von Polyurethankunststoffen:

Die Reaktionskomponenten werden nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der US-PS 27 64 565 beschrieben werden. Einzelheiten über Verarbeitungseinrichtungen, die auch erfindungsgemäß in Frage kommen, werden im Kunststoff-Handbuch, Band VII herausgegeben von Vieweg und Höchtlen, Carl-Hanser-Verlag, München 1966, z.B. auf den Seiten 121-205, beschrieben.

Erfindungsgemäß lassen sich auch kalthärtende Schaumstoffe herstellen (vgl. GB-PS 11 62 517, DE-OS 21 53 086).

Selbstverständlich können aber auch Schaumstoffe durch Blockverschäumung oder nach dem an sich bekannten Doppeltransportbandverfahren hergestellt werden.

Die nach der Erfindung erhältlichen harten Schaumstoffe finden z.B. als Dämmplatten für die Dachisolierung Anwendung. Die erfindungsgemäß bevorzugt erhältlichen Polyurethan-Weichschaumstoffe finden z.B. als Armlehnen (z.B. im PKW) und als Polster für Möbel und Sitze in Verkehrsmitteln Anwendung.

## Beispiel 1

### a) Herstellung der Dispersion

In einem Stachelrührer (Kammervolumen 0,5 1, Drehzahl 5.000 U/min) werden kontinuierlich bei Raumtemperatur pro Minute 4.000 g eines aus Propylenoxid, Ethylenoxid und Trimethylolpropan hergestellten Polyethers (Hydroxylzahl 35, ca. 80 % primäre OH-Gruppen), 890 g einer Mischung aus 60 Gew.-% 4,4'-MDI, 23 Gew.-% 2,4'-MDI, 2 Gew.-% 2,2'-MDI und 15 Gew.-% Polyphenylpolymethylenpolyisocyanaten (oligomere Isomere) und 175 g Hydrazinhydrat eingeführt. Dabei wird der Polyether aus dem Vortatskessel über eine Zahnradpumpe gefördert, während die beiden dünnflüssigen Komponenten aus getrennten Vortatsgefäßen über Kolbendosierpumpen gefördert werden. In dem Stachelrührer erfolgt unter exothermer Reaktion die Polyaddition. Durch Kühlung des Stachelrührers wird die Reaktionstemperatur auf 100°C eingestellt. Nach einer Verweilzeit von ca. 6 Sekunden verläßt eine fast vollständig abreagierte Dispersion den Stachelrührer. Die gebildete, aber noch nicht vollständig abreagierte Dispersion wird in ein Verweilzeitgefäß überführt, wo sie unter Rühren auf 80°C bis 100°C gehalten wird.

Nach dem Nachrühren wird dann das vom Hydrazinhydrat herrührende Wasser bei 100°C im Vakuum abdestilliert. Man erhält eine stabile, feinteilige, 20 gew.-%ige Dispersion mit einer OH-Zahl von 28 und einer Viskosität von 3.600 mPas/25°C.

### b) Herstellung eines Polyurethan-Weichschaumstoffs

### A-Komponente

60 Gew.-Tle. der Dispersion nach Beispiel 1a
40 Gew.-Tle. eines Polyetherpolyols der OH-Zahl 28, hergestellt durch Propoxylierung von Trimethylolpropan und anschließende Ethoxylierung
3,3 Gew.-Tle. Wasser
0,12 Gew.-Tle. Bis-dimethylaminoethyl-ether (Katalysator)
0,50 Gew.-Tle. einer 33 %igen Lösung von Diazabicyclo-(2,2,2)octan in Dipropylenglykol (Katalysator)
0,20 Gew.-Tle. eines handelsüblichen Schaum-Stabilisators (B 4617 der Fa. Goldschmidt AG, Essen)
0,80 Gew.-Tle. eines handelsüblichen Schaum-Stabilisators (KS 43 der Bayer AG)

### B-Komponente

Abmischung aus 80 Gew.-% TDI 80 und 20 Gew.-% eines Gemisches von Diphenylmethan-diisocyanaten und Polyphenylenpolymethylenpolyisocyanaten der Zusammensetzung:
50 Gew.-% 4,4'-MDI,
3 Gew.-% 2,4'-MDI

sowie

47 Gew.-% oligomere Isomere.

100 Gew.-Teile der A-Komponente werden mit

38 Gew.-Teilen der B-Komponente auf einer Hochdruckmaschine vermischt.

Das Reaktionsgemisch wird in eine 40-Liter-Kastenform eingetragen, die auf etwa 50°C angewärmt ist. Die Form wird geschlossen und das Weichschaumstoff-Formteil nach etwa 6 Minuten aus der Form genommen. Das Füllgewicht beträgt 1,88 kg. Es ergeben sich folgende Werte bei der mechanischen Prüfung:

Prüfergebnisse

| | | |
|---|---|---|
| Rohdichte | (kg/m$^3$) DIN 53 420 | 42,4 |
| Stauchhärte 50 % | (kPa) DIN 53 577 | 5,1 |
| Zugfestigkeit | (kPa) DIN 53 571 | 186 |
| Bruchdehnung | (%) DIN 53 571 | 148 |
| DVR 50 % $C_d$-Wert | (%) GME 60 283 | 7,5 |
| Dampfautoklav-Lagerung | GME 60 283 | |
| Stauchhärte nach Lagerung (kPa) | 5,2 | |
| DVR 50 % $C_d$-Wert | | |
| nach Lagerung (%) | | 24,2 |

Beispiel 2 (Vergleichsbeispiel)

a) Herstellung der Dispersion

Die Polyetherdispersion wird wie in Beispiel 1a) hergestellt, lediglich das eingesetzte Isocyanat und die Mengenverhältnisse sind unterschiedlich. Es werden 4.000 g Polyether wie in Beispiel 1a) mit 845 g einer Mischung aus 80 Gew.-% 2,4- und 20 Gew.-% 2,6-Toluylendiisocyanat und 245 g Hydrazinhydrat entsprechend Beispiel 1a) zur Reaktion gebracht. Man erhält eine stabile, weiße, feinteilige, 20 gew.-%ige Dispersion mit einer OH-Zahl von 28 und einer Viskosität von 3.000 mPas/25°C.

b) Herstellung eines Polyurethan-Weichschaumstoffs

A-Komponente

60 Gew.-Teile der Dispersion nach Beispiel 2a). Alle weiteren Bestandteile der A-Komponente sind wie in Beispiel 1a) angegeben.

B-Komponente

Identisch mit Beispiel 1b)

100 Gew.-Teile der A-Komponente werden mit

38 Gew.-Teilen der B-Komponente auf einer Hochdruckmaschine vermischt.

Das Reaktionsgemisch wird in eine 40-Liter-Kastenform eingetragen, die auf etwa 50°C angewärmt ist. Die Form wird geschlossen und das Weichschaumstoff-Formteil nach etwa 6 Minuten aus der Form genommen. Das Füllgewicht beträgt 1,88 kg. Es ergeben sich folgende Werte bei der mechanischen Prüfung:

EP 0 448 813 B1

Prüfergebnisse

| | | | |
|---|---|---|---|
| Rohdichte | (kg/m³) | DIN 53 420 | 42,0 |
| Stauchhärte 50 % | (kPa) | DIN 53 577 | 4,3 |
| Zugfestigkeit | (kPa) | DIN 53 571 | 166 |
| Bruchdehnung | (%) | DIN 53 571 | 151 |
| DVR 50 % $C_d$-Wert | (%) | GME 60 283 | 9,1 |
| Dampfautoklav-Lagerung | | GME 60 283 | |
| Stauchhärte nach Lagerung (kPa) | | 5,0 | |
| DVR 50 % $C_d$-Wert | | | |
| nach Lagerung (%) | | | 32,6 |

Der Vergleich der Beispiele 1 und 2 macht deutlich, daß die Dampfautoklavlagerung der erfindungsgemäßen Schaumstoffe deutlich geringfügiger schädigt. Insgesamt ist das Werteniveau der erfindungsgemäßen Schaumqualität gegenüber den herkömmlichen nach Beispiel 2 verbessert.

Beispiel 3 (Vergleichsbeispiel)

Die Dispersion wird wieder wie in Beispiel 1a) hergestellt mit einer Isocyanat-Type, welche üblicherweise als "rohes MDI" bezeichnet wird. Das in diesem Falle zum Einsatz gekommene MDI hat folgende Zusammensetzung:

49 Gew.-% 4,4'-MDI
2 Gew.-% 2,4'-MDI
0,5 Gew.-% 2,2'-MDI
49 Gew.-% oligomere Isomere.
Es resultiert eine weiß-braune Paste mit einer nicht mehr handhabbaren Viskosität.

**Patentansprüche**

1. Stabile Dispersionen von Polyharnstoffen und/oder Polyhydrazodicarbonamiden in mindestens eine Hydroxylgruppe aufweisenden höhermolekularen Verbindungen vom mittleren Molekulargewicht 200 bis 16.000, erhältlich durch Umsetzung
   a) eines Gemischs aus Diphenylmethan-diisocyanaten und Polyphenylpolymethylen-polyisocyanaten, bestehend aus
      50-75 Gew.-% 4,4'-Diphenylmethan-diisocyanat
      10-25 Gew.-% 2,4'-Diphenylmethan-diisocyanat
      0- 4 Gew.-% 2,2'-Diphenylmethan-diisocyanat
      0-30 Gew.-% Polyphenyl-polymethylen-polyisocyanaten mit
   b) primäre und/oder sekundäre Aminogruppen aufweisenden Polyaminen und/oder Hydrazinen und/oder Hydraziden in den
   c) mindestens eine Hydroxylgruppe aufweisenden höhermolekularen Verbindungen vom mittleren Molekulargewicht 200 bis 16.000.

2. Stabile Dispersionen gemäß Anspruch 1, in denen als höhermolekulare Verbindungen (Komponente c) Polyether eingesetzt werden.

3. Stabile Dispersionen gemäß Anspruch 1 und 2, in denen die Komponente b) bis zu 40 Mol-% an Alkanolaminen enthält.

4. Verfahren zur Herstellung von stabilen Dispersionen von Polyharnstoffen und/oder Polyhydrazodicarbonamiden in mindestens eine Hydroxylgruppe aufweisenden höhermolekularen Verbindungen vom mittleren Molekulargewicht 200 bis 16.000, dadurch gekennzeichnet, daß man

a) ein Gemisch aus Diphenylmethan-diisocyanaten und Polyphenyl-polymethylen-polyisocyanaten, bestehend aus

50-75 Gew.-% 4,4'-Diphenylmethan-diisocyanat

10-25 Gew.-% 2,4'-Diphenylmethan-diisocyanat

0- 4 Gew.-% 2,2'-Diphenylmethan-diisocyanat und

0-30 Gew.-% Polyphenyl-polymethylen-polyisocyanaten mit

b) primäre und/oder sekundäre Aminogruppen aufweisenden Polyaminen und/oder Hydrazinen und/oder Hydraziden in

c) mindestens eine Hydroxylgruppe aufweisenden höhermolekularen Verbindungen vom mittleren Molekulargewicht 200 bis 16.000

umsetzt.

5. Verfahren zur Herstellung von gegebenenfalls geschäumten Polyurethankunststoffen, insbesondere von Weichschaumstoffen, durch Umsetzung von Polyisocyanaten mit Verbindungen mit mindestens zwei gegenüber Isocyanaten reaktionsfähigen Wasserstoffatomen von einem mittleren Molekulargewicht von 200 bis 16.000, gegebenenfalls in Gegenwart von Wasser und/oder leichtflüchtigen organischen Substanzen als Treibmittel sowie gegebenenfalls unter Mitverwendung von Katalysatoren, Schaumhilfs- und Zusatzmitteln und Kettenverlängerungs- und/oder Vernetzungsmitteln, dadurch gekennzeichnet, daß als höhermolekulare Verbindungen mit mindestens zwei gegenüber Isocyanaten reaktionsfahigen Wasserstoffatomen vom mittleren Molekulargewicht 200-16 000 ausschließlich oder teilweise Dispersionen gemäß Ansprüchen 1 bis 3 eingesetzt werden.

## Claims

1. Stable dispersions of polyureas and/or polyhydrazodicarbonamides in relatively high molecular weight compounds containing at least one hydroxyl group and having a molecular weight of 200 to 16,000, obtainable by reaction of

a) a mixture of diphenyl methane diisocyanates and polyphenyl polymethylene polyisocyanates consisting of

50 to 75% by weight 4,4'-diphenyl methane diisocyanate

10 to 25% by weight 2,4'-diphenyl methane diisocyanate

0 to 4% by weight 2,2'-diphenyl methane diisocyanate

0 to 30% by weight polyphenyl polymethylene polyisocyanates

with

b) polyamines containing primary and/or secondary amino groups and/or hydrazines and/or hydrazides in the

c) relatively high molecular weight compounds containing at least one hydroxyl group and having a molecular weight in the range from 200 to 16,000.

2. Stable dispersions as claimed in claim 1 in which polyethers are used as the relatively high molecular compounds (component c).

3. Stable dispersions as claimed in claims 1 and 2 in which component b) contains up to 40 mol-% alkanolamines.

4. A process for the production of stable dispersions of polyureas and/or polyhydrazodicarbonamides in relatively high molecular weight compounds containing at least one hydroxyl group and having a molecular weight of 200 to 16,000, characterized in that

a) a mixture of diphenyl methane diisocyanates and polyphenyl polymethylene polyisocyanates consisting of

50 to 75% by weight 4,4'-diphenyl methane diisocyanate

10 to 25% by weight 2,4'-diphenyl methane diisocyanate

0 to 4% by weight 2,2'-diphenyl methane diisocyanate and

0 to 30% by weight polyphenyl polymethylene polyisocyanates

are reacted with

b) polyamines containing primary and/or secondary amino groups and/or hydrazines and/or hydrazides in

c) relatively high molecular weight compounds containing at least one hydroxyl group and having a molecular weight in the range from 200 to 16,000.

5. A process for the production of optionally foamed polyurethane plastics, more particularly flexible foams, by reaction of polyisocyanates with compounds containing at least two isocyanate-reactive hydrogen atoms and having an average molecular weight of 200 to 16,000, optionally in the presence of water and/or readily volatile organic substances as blowing agents and optionally using catalysts, foam auxiliaries and additives and chain-extending and/or crosslinking agents, characterized in that the dispersions claimed in claims 1 to 3 are exclusively or partly used as the relatively high molecular weight compounds containing at least two isocyanate-reactive hydrogen atoms and having an average molecular weight of 200 to 16,000.

## Revendications

1. Dispersions stables et polyurées et/ou polyhydrazodicarboxamides dans des composés à haut poids moléculaire contenant au moins un groupe hydroxy, de poids moléculaire moyen 200 à 16 000, obtenues par réaction de:

    a) un mélange de diphénylméthane-diisocyanates et de polyphénylpolyméthylène-polyisocyanates consistant en:

    50 à 75 % en poids de 4,4'-diphénylméthane-diisocyanate

    10 à 25 % en poids de 2,4'-diphénylméthane-diisocyanate

    0 à 4 % en poids de 2,2'-diphénylméthane-diisocyanate

    0 à 30 % en poids de polyphényl-polyméthylène-polyisocyanates, avec

    b) des polyamines et/ou hydrazines et/ou hydrazides contenant des groupes amino primaires et/ou secondaires, dans

    c) les composés à haut poids moléculaire contenant au moins un groupe hydroxy, de poids moléculaire moyen 200 à 16 000.

2. Dispersions stables selon revendication 1, pour lesquelles on a utilisé en tant que composés à haut poids moléculaire (composant c) des polyéthers.

3. Dispersions stables selon revendications 1 et 2, pour lesquelles le composant b) contient jusqu'à 40 mol % d'alcanolamines.

4. Procédé de préparation de dispersions stables de polyurées et/ou de polyhydrazodicarboxamides dans des composés à haut poids moléculaire contenant au moins un groupe hydroxy, de poids moléculaire moyen 200 à 16 000, caractérisé en ce que l'on fait réagir:

    a) un mélange de diphénylméthane-diisocyanates et de polyphénylpolyméthylène-diisocyanates consistant en:

    50 à 75 % en poids de 4,4'-diphénylméthane-diisocyanate,

    10 à 25 % en poids de 2,4'-diphénylméthane-diisocyanate,

    0 à 4 % en poids de 2,2'-diphénylméthane-diisocyanate, et

    0 à 30 % en poids de polyphényl-polyméthylène-polyisocyanates, avec

    b) des polyamines et/ou hydrazines et/ou hydrazides contenant des groupes amino primaires et/ou secondaires, dans

    c) les composés à haut poids moléculaire, contenant au moins un groupe hydroxy, de poids moléculaire moyen 200 à 16 000.

5. Procédé de préparation de résines synthétiques de polyuréthannes éventuellement gonflées en mousse, et en particulier de mousses souples, par réaction de polyisocyanates avec des composés contenant au moins deux atomes d'hydrogène réactifs avec les isocyanates et ayant un poids moléculaire moyen de 200 à 16 000, éventuellement en présence d'eau et de substances organiques volatiles servant d'agents porogènes et éventuellement avec utilisation conjointe de catalyseurs, de produits auxiliaires de gonflement et d'additifs, d'agents d'allongement des chaînes et/ou d'agents réticulants, caractérisé en ce que l'on utilise en tant que composés à haut poids moléculaire contenant au moins deux atomes d'hydrogène réactifs avec les isocyanates et de poids moléculaire moyen 200 à 1 600, exclusivement ou en partie, des dispersions selon les revendications 1 à 3.